# EUROPEAN PATENT SPECIFICATION

(11) **EP 2 762 357 B1**
(45) Date of publication and mention of the grant of the patent: **14.11.2018**
(21) Application number: 13182644.8
(22) Date of filing: 02.09.2013
(51) Int. Cl.: B60P 7/08, B65H 54/58

(54) **Tie-down device**
Verzurrvorrichtung
Dispositif d'arrimage

(30) Priority: 01.02.2013 TW 102104077
(43) Date of publication of application: 06.08.2014
(73) Proprietor: Huang, Han-Ching, Situn, Taichung City 407 (TW)
(72) Inventor: Huang, Han-Ching, Situn, Taichung City 407 (TW)
(74) Representative: Lang, Christian

(56) References cited:
- EP-A1- 2 368 758
- CA-A1- 2 507 849
- US-A- 5 388 609
- US-B1- 6 609 275

## Description

### BACKGROUND OF INVENTION

### 1. FIELD OF INVENTION

The present invention relates to a tie-down device and, more particularly, to a tie-down device equipped with a speed-increasing gearbox.

### 2. RELATED PRIOR ART

As disclosed in US Patent Nos. 5611520, 7100902 and 8172203, a tie-down device includes a frame, two axles and a knob. The frame includes two separate walls extending from a base. The axles are supported on the walls. The knob is connected to an end of one of the axles that extends beyond one of the walls. The knob is operable to wind a strap onto the axle that is connected thereto. However, the winding of the strap onto the axle is troublesome and slow.

As disclosed in US Patent No. 6609275, a tie-down device includes a frame, an axle, a reel and a coil spring. The axle is non-rotationally supported on the frame. The reel is rotationally provided around the axle. The coil spring includes an end connected to the axle and another end connected to the reel. The coil spring is loaded as a strap is unwound from the reel. The strap can be wound onto the reel by the coil spring. The wind of the strap onto the reel is automatic. However, the diameter of the coil spring is large as the strap is long. That is, a large coil spring requires a lot of steel which is heavy and expensive.

A further tie-down device is disclosed in CA 2 507 849 A1, which discloses the preamble of claim 1.

Therefore, the present invention is intended to obviate or at least alleviate the problems encountered in prior art.

### SUMMARY OF INVENTION

It is the primary objective of the present invention to provide a light tie-down device that winds a strap fast.

To achieve the foregoing objective, the tie-down device includes a frame, a strap, a reeling unit, a driving unit and a gear box. The frame includes two walls extending from a base. The reeling unit includes a reel rotationally supported on the walls for reeling the strap. The driving unit is supported on the first wall. The gearbox connects the driving unit to the reeling unit.

Other objectives, advantages and features of the present invention will be apparent from the following description referring to the attached drawings.

### BRIEF DESCRIPTION OF DRAWINGS

The present invention will be described via detailed illustration of three embodiments referring to the drawings wherein:
FIG. 1 is a perspective view of a tie-down device according to the first embodiment of the present invention;
FIG. 2 is an exploded view of the tie-down device shown in FIG. 1;
FIG. 3 is a side view of the tie-down device shown in FIG. 1;
FIG. 4 is a cross-sectional view of the tie-down device taken along a line A-A in FIG. 3;
FIG. 5 is another cross-sectional view of the tie-down device shown in FIG. 1;
FIG. 6 is a cross-sectional view of a tie-down device according to the second embodiment of the present invention;
FIG. 7 is another cross-sectional view of the tie-down device shown in FIG. 6;
FIG. 8 is a cross-sectional view of a tie-down device according to the third embodiment of the present invention; and
FIG. 9 is another cross-sectional view of the tie-down device shown in FIG. 8.

### DETAILED DESCRIPTION OF EMBODIMENTS

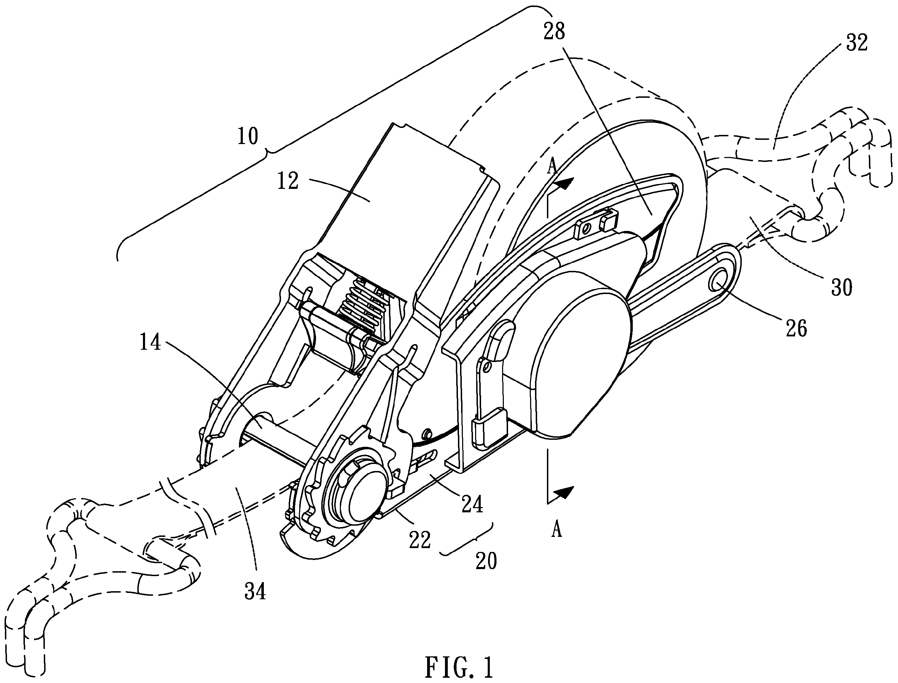

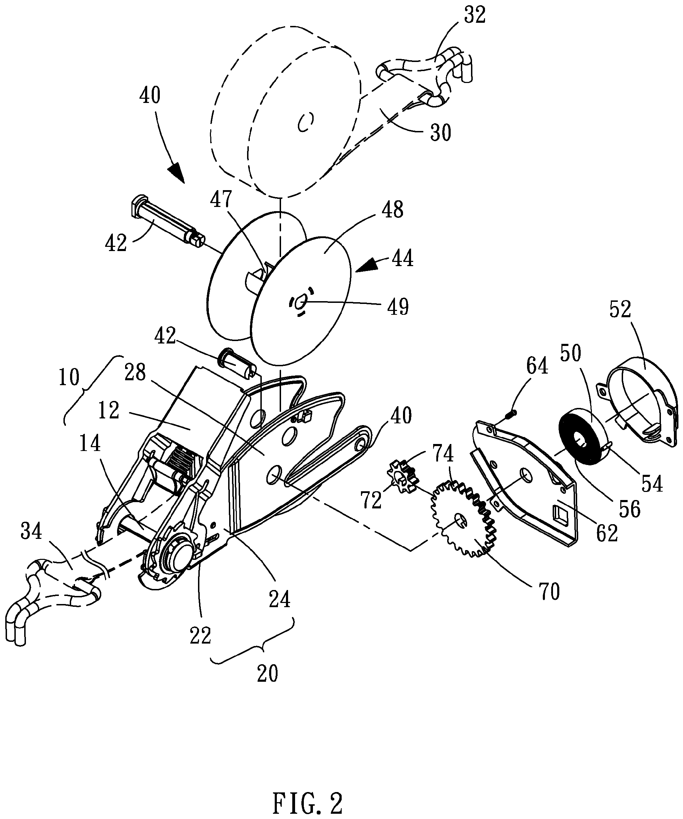

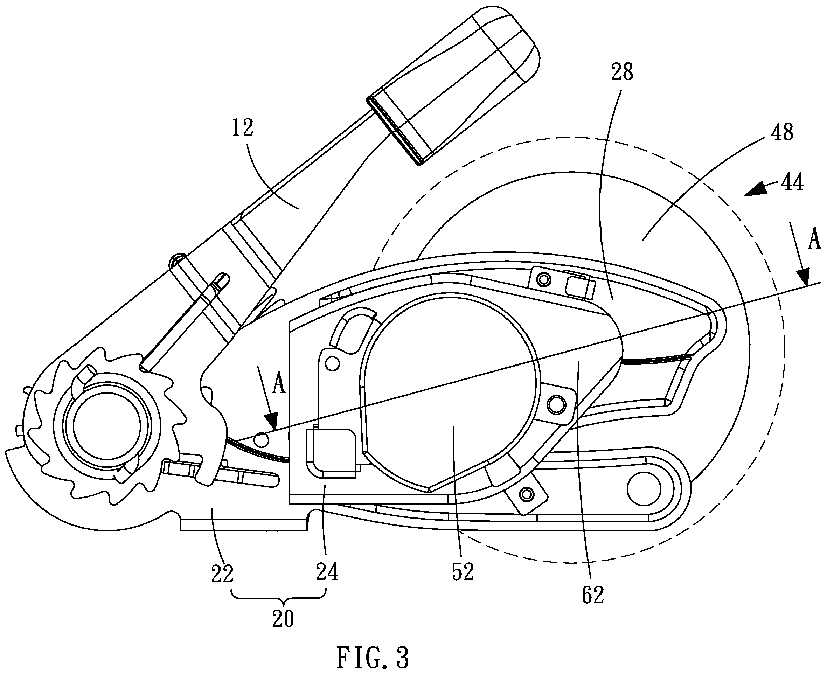

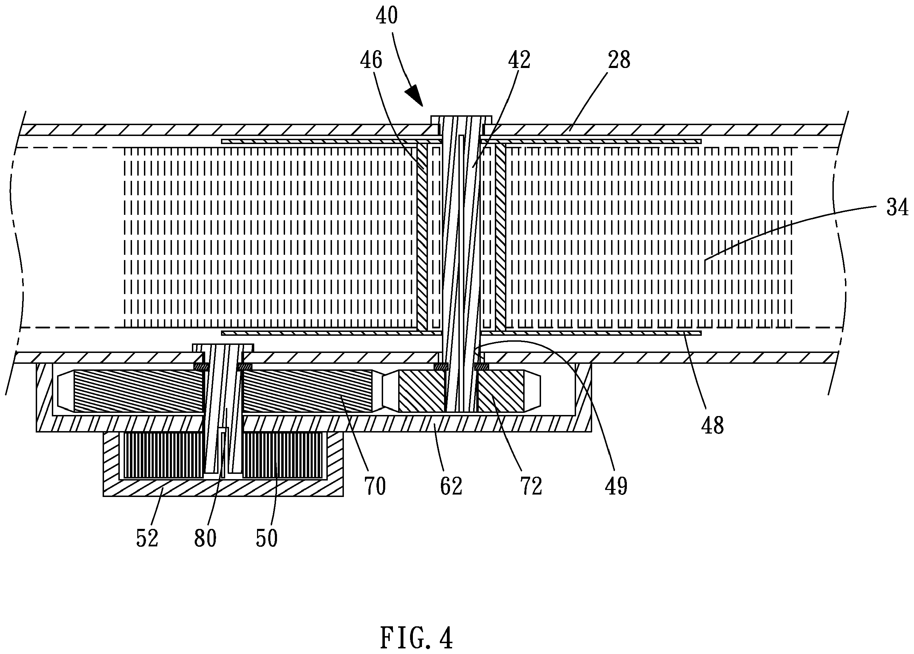

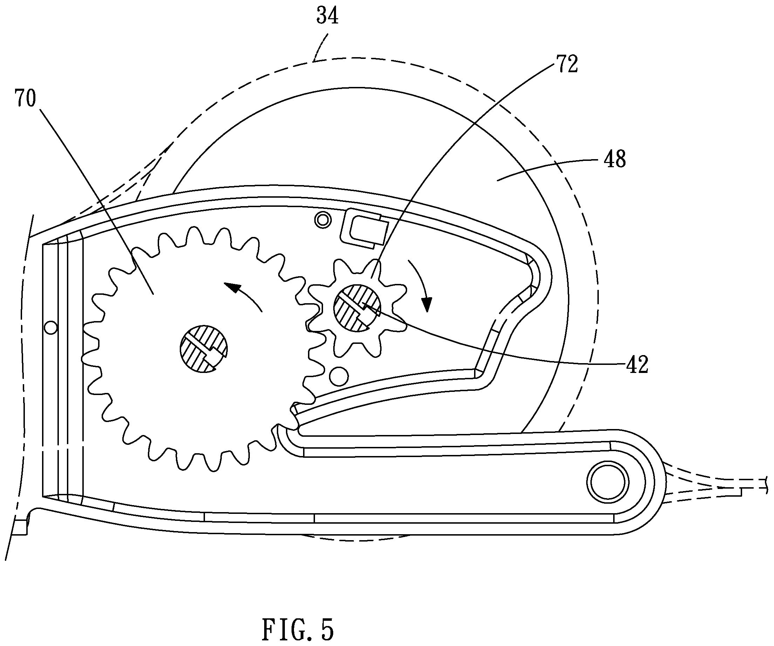

Referring to FIGS. 1 through 5, there is shown a tie-down device 10 according to a first embodiment of the present invention. The tie-down device 10 includes a frame 20, an axle 14, a handle 12, a reeling unit 40, a driving unit and a speed-increasing gearbox 60. The frame 20 includes a base 22, two separate walls 24 and a bar 26. The walls 24 are formed on the base 22. One of the walls 24 is formed with an outwardly protrusive portion 28. The bar 26 is connected to both of the walls 24 for reinforcing the frame 20. A short strap 30 includes an end connected to the bar 26 and another end connected to a hook 32.

The handle 12 is connected to the axle 14. The axle 14 is supported on the walls 24 rotationally. A long strap 34 includes a first end tied to the reeling unit 40 and a second end connected to a hook 32. The long strap 34 is inserted via a slot defined in the axle 14. The long strap 34 can be wound onto the axle 14 by operating the handle 12.

The reeling unit 40 includes an axle 42 for rotationally supporting a reel 44 on the walls 24. The reel 44 includes a tube 46 placed between and connected to two wheels 48 by welding or soldering. The tube 46 includes a slit 47 longitudinally made therein. Each of the wheels 48 includes an aperture 49 centrally made therein. The axle 42 is axially inserted in the tube 46 through the apertures 49 of the wheels 48.

The first end of the long trap 34 is tied to the axle 42 after it is inserted in the tube 46 through the slit 47. The long strap 34 can be wound on the tube 46. The wheels 48 position and prevent the long strap 34 from rubbing against the walls 24.

The speed-increasing gearbox 60 includes a shell 62, a large gear 70, a small gear 72 and an axle 80. The axle 80 is rotationally supported on the walls 24. The axle 80 includes a butt (not shown) formed at an end and a slit 86 defined in an opposite end. A clip 84 is placed in a groove defined in the axle 80 near the butt. The butt is placed against an internal side of the outwardly protrusive portion 28 of the wall 24 while a clip 84 is placed against an external side of the same to keep the axle 80 on the outwardly protrusive portion 28 of the wall 24.

The large gear 70 is secured to the axle 80 so that they are rotatable together. The small gear 72 is secured to the axle 42 so that they are rotatable together. The small gear 72 is meshed with the large gear 70. Preferably, the large gear 70 includes teeth three times as many as the small gear 72 so that the small gear 72 rotates for three rounds as the large gear 70 rotates for one round.

The large gear 70 and the small gear 72 are protectively covered by the shell 62. Screws 64 are used to connect the shell 62 to the wall 24 that is formed with the outwardly protrusive portion 28.

The driving unit includes a coil spring 50 and a cover 52. The coil spring 50 includes an external end 54 hooking a tab extending from an internal side of the cover 52 and an internal end 56 extending through a slit 86 defined in the axle 80. The cover 52 is connected to the wall 24 that is formed with the outwardly protrusive portion 28.

The coil spring 50 is loaded as the long strap 34 is unwound from the reel 44. The long strap 34 can be wound onto the reel 44 by the coil spring 50 via the speed-increasing gearbox 60. The coil spring 50 does not have to be long to wind a long strap 34 onto the reel 44 due to the use of the speed-increasing gearbox 60. The coil spring 50 can be small and light. The coil spring 50 requires only a small amount of steel and is hence inexpensive.

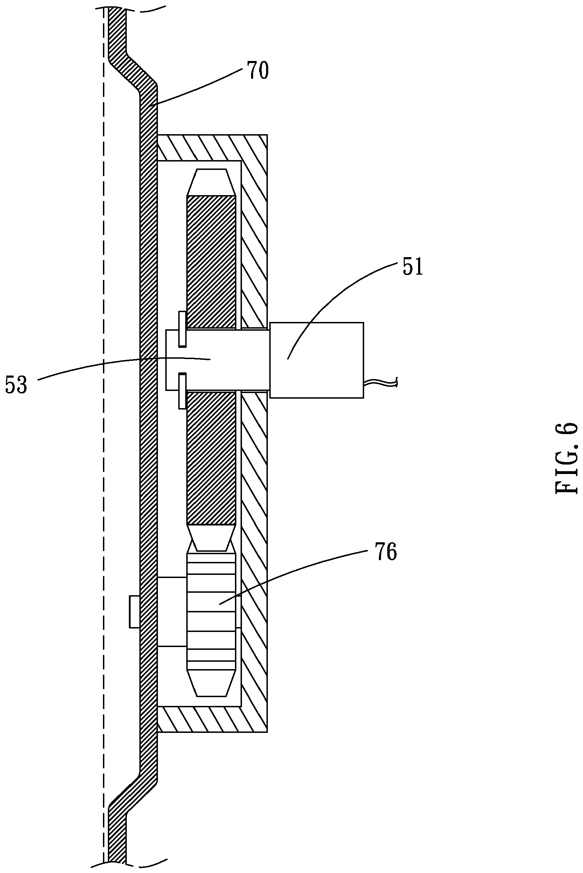

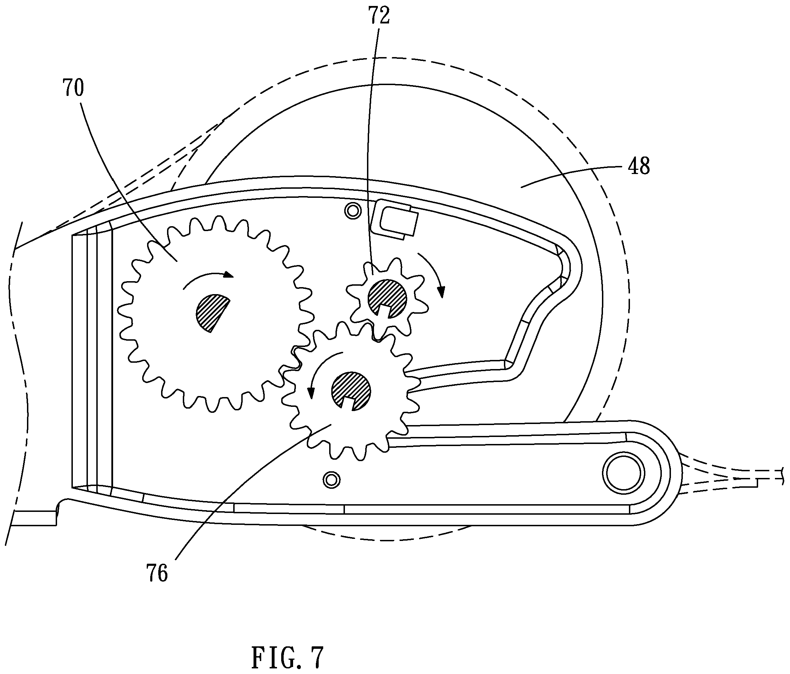

Referring to FIGS. 6 and 7, there is shown a tie-down device according to a second embodiment of the present invention. The second embodiment is like the first embodiment except several things. At first, there is used a motor 51 instead of the coil spring 50. The motor 51 is connected to the cover 52. The large gear 70 is connected to a mandrel 53 of the motor 51. Secondly, there is used a medium gear 76 between the large gear 70 and the small gear 72. Preferably, the large gear70 includes twenty-four teeth, the medium gear 76 includes sixteen teeth, and the small gear 72 includes eight teeth so that the small gear 72 rotates for three rounds as the large gear 70 rotates for one round. Thirdly, the axle 80 is omitted. Fourthly, the cover 52 is omitted.

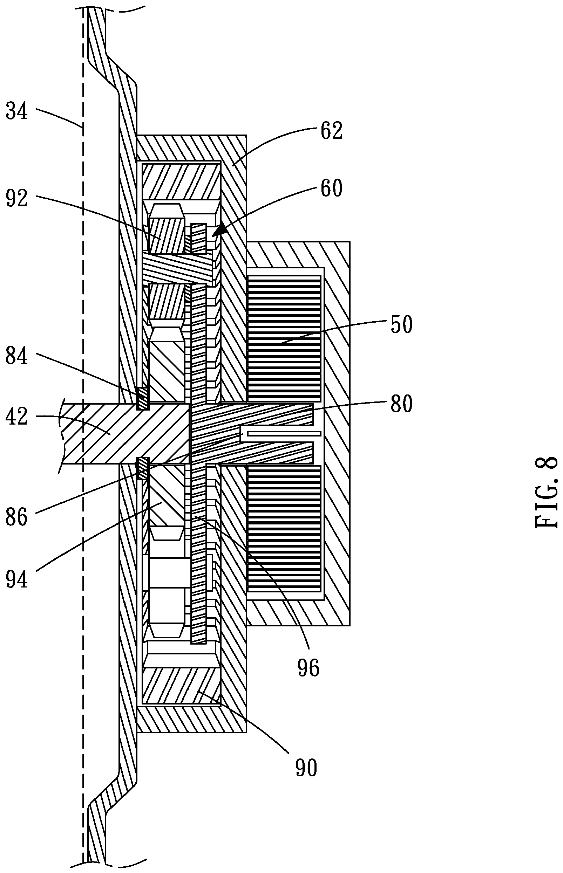

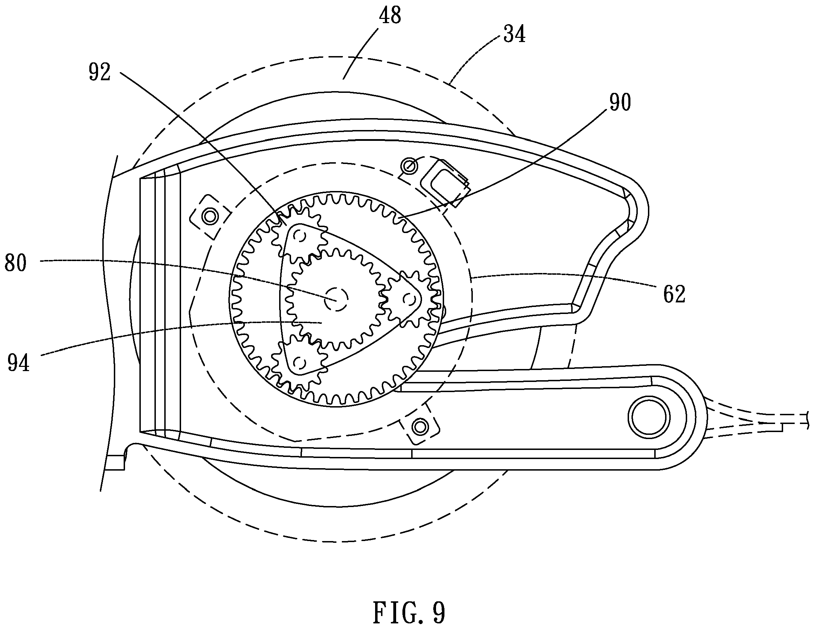

Referring to FIGS. 8 and 9, there is shown a tie-down device according to a third embodiment of the present invention. The third embodiment is like the first embodiment except that speed-increasing gearbox 60 includes a planetary gear train instead of the large gear 70 and the small gear 72. The planetary gear train inherently includes an internal gear 90, several planetary gears 92, a sun gear 94 and a carrier 96. Preferably, there are three planetary gears 92. The planetary gears 92 and the sun gear 94 are rotationally supported on the carrier 96. Each of the planetary gears 92 is meshed with the internal gear 90 and the sun gear 94.

The internal gear 90 is non-rotationally placed in the shell 62. The carrier 96 is connected to the axle 80 so that they are rotatable together. The sun gear 94 is connected to the axle 42 so that they are rotatable together.

The coil spring 50 rotates the axle 80 as well as the carrier 96. The carrier 96 rotates the sun gear 94 as well as the axle 42 via the planetary gears 92. The axles 80 and 42 rotate in a same direction.

Preferably, the internal gear 90 includes forty-eight teeth, each of the planetary gears 92 includes twelve gears, and the sun gear 94 includes twenty-four teeth. Thus, the sun gear 94 rotates for four rounds as the carrier 96 rotates one round.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A tie-down device including:
a frame (20) including a base (22) and first and second walls (24) extending from the base (22);
a strap (30);
a reeling unit (40) including a reel (44) and an axle (42) for rotationally supporting the reel (44) on the first and second walls (24) for reeling the strap (30);
a driving unit supported on the first wall (24); and
a gearbox (60) for connecting the driving unit to the reeling unit (40)
**characterized in that** the driving unit includes a coil spring (50) connected to the first wall (24) at an end and connected to the axle (42) at another end.

2. The tie-down device according to claim 1, wherein the driving unit further includes a cover (52) attached to the first wall (24) for covering the coil spring (50).

3. The tie-down device according to claim 1, wherein the driving unit includes a motor (51) supported on the first wall (24) and operatively connected to the speed-increasing unit (60).

4. The tie-down device according to claim 1, wherein the gearbox (60) is a speed-increasing gearbox (60).

5. The tie-down device according to claim 4, wherein the gearbox (60) includes:
a small gear (72) connected to the axle (42) so that they are rotatable together; and
a large gear (70) engaged with the small gear (72) and connected to the driving unit.

6. The tie-down device according to claim 5, wherein the gearbox (60) includes an axle (80) rotationally supported on the first wall (24) and connected to the large gear (70) so that they are rotatable together.

7. The tie-down device according to claim 6, wherein the gearbox (60) further includes a clip (84) fit on the axle (80) and placed against an opposite side of the first wall (24).

8. The tie-down device according to claim 5, wherein the gearbox (60) includes a shell (62) attached to the first wall (24) for shielding the small and large gears (72, 70).

9. The tie-down device according to claim 5, wherein the gearbox (60) further includes a medium gear (76) provided between the small and large gears (72, 70).

10. The tie-down device according to claim 4, wherein the gearbox (60) includes:
an internal gear (90) non-rotationally supported on the first wall (24);
a carrier (96) rotationally placed in the internal gear (90) and connected to the driving unit;
planetary gears (92) rotationally supported on the carrier (96) and meshed with the internal gear (90); and
a sun gear (94) connected to the axle (42) so that they are rotatable together and meshed with the planetary gears (92).

11. The tie-down device according to claim 10, wherein the gearbox (60) further includes an axle (80) connected to the carrier (96) so that they are rotatable together and connected to the driving unit.

12. The tie-down device according to claim 3, wherein the gearbox (60) is a speed-increasing gearbox (60).

13. The tie-down device according to claim 12, wherein the gear box (60) includes:
a small gear (72) connected to the axle (42) so that they are rotatable together; and
a large gear (70) operatively connected to the motor (51).

14. The tie-down device according to claim 12, wherein the motor (51) includes a mandrel (53) connected to the large gear (70).

## Patentansprüche

1. Verzurrvorrichtung, umfassend:
einen Rahmen (20), der eine Basis (22) und erste und zweite Wände (24) umfasst, die sich von der Basis (22) erstrecken,
einen Riemen (30),
eine Aufrolleinheit (40), die eine Rolle (44) und eine Achse (42) zur Drehlagerung der Rolle (44) an den ersten und zweiten Wänden (24) zum Rollen des Riemens (30) umfasst,
eine Antriebseinheit, die an der ersten Wand (24) gelagert ist, und
ein Getriebe (60) zur Verbindung der Antriebseinheit mit der Aufrolleinheit (40),
**dadurch gekennzeichnet, dass**
die Antriebseinheit eine Spiralfeder (50) umfasst, die mit der ersten Wand (24) an einem Ende und mit der Achse (42) an einem anderen Ende verbunden ist.

2. Verzurrvorrichtung gemäß Anspruch 1, bei welcher die Antriebseinheit ferner eine Abdeckung (52) umfasst, die an der ersten Wand (24) zum Abdecken der Spiralfeder (50) angebracht ist.

3. Verzurrvorrichtung gemäß Anspruch 1, bei welcher die Antriebseinheit einen Motor (51) umfasst, der an der ersten Wand (24) gelagert ist und mit der Geschwindigkeitssteigerungseinheit (60) betriebsmäßig verbunden ist.

4. Verzurrvorrichtung gemäß Anspruch 1, bei welcher das Getriebe (60) ein Geschwindigkeitssteigerungsgetriebe (60) ist.

5. Verzurrvorrichtung gemäß Anspruch 4, bei welcher das Getriebe (60) umfasst:
ein kleines Zahnrad (72), das mit der Achse (42) verbunden ist, so dass sie zusammen drehbar sind; und
ein großes Zahnrad (70), das mit dem kleinen Zahnrad (72) in Eingriff steht und mit der Antriebseinheit in verbunden ist.

6. Verzurrvorrichtung gemäß Anspruch 5, bei welcher das Getriebe (60) eine Achse (80) umfasst, die an der ersten Wand (24) drehbar gelagert ist und mit dem großen Zahnrad (70) verbunden ist, so dass sie zusammen drehbar sind.

7. Verzurrvorrichtung gemäß Anspruch 6, bei welcher das Getriebe (60) ferner einen Clip (84) umfasst, der an der Achse (80) angebracht ist und gegen ein entgegengesetztes Ende der ersten Wand (24) platziert ist.

8. Verzurrvorrichtung gemäß Anspruch 5, bei welcher das Getriebe (60) eine Hülle (62) umfasst, die an der ersten Wand (24) zum Schutz der kleinen und großen Zahnräder (72, 70) angebracht ist.

9. Verzurrvorrichtung gemäß Anspruch 5, bei welcher das Getriebe (60) ferner ein mittleres Zahnrad (76) umfasst, das zwischen den kleinen und großen Zahnrädern (72, 70) bereitgestellt ist.

10. Verzurrvorrichtung gemäß Anspruch 4, bei welcher das Getriebe (60) umfasst:
ein inneres Zahnrad (90), das nicht-drehbar an der ersten Wand (24) gelagert ist;
einen Träger (96), der drehbar in dem inneren Zahnrad (90) platziert ist und mit der Antriebseinheit verbunden ist;
Planetenzahnräder (92), die an dem Träger (96) drehbar gelagert sind und mit dem inneren Zahnrad (90) in Eingriff stehen, und
ein Sonnenzahnrad (94), das mit der Achse (42) verbunden ist, so dass sie zusammen drehbar sind und mit den Planetenzahnrädern (92) in Eingriff stehen.

11. Verzurrvorrichtung gemäß Anspruch 10, bei welcher das Getriebe (60) ferner eine Achse (80) umfasst, die mit dem Träger (96) verbunden ist, so dass sie zusammen drehbar sind und mit der Antriebseinheit verbunden sind.

12. Verzurrvorrichtung gemäß Anspruch 3, bei welcher das Getriebe (60) ein Geschwindigkeitssteigerungsgetriebe (60) ist.

13. Verzurrvorrichtung gemäß Anspruch 12, bei welcher das Getriebe (60) umfasst:
ein kleines Zahnrad (72), das mit der Achse (42) verbunden ist, so dass sie zusammen drehbar sind, und
ein großes Zahnrad (70), das mit dem Motor (51) betriebsmäßig verbunden ist.

14. Verzurrvorrichtung gemäß Anspruch 12, bei welcher der Motor (51) einen Dorn (53) umfasst, der mit dem großen Zahnrad (70) verbunden ist.

## Revendications

1. Dispositif d'arrimage incluant:
un cadre (20) incluant une base (22) et des première et seconde parois (24) s'étendant depuis la base (22);
une sangle (30);
une unité de dévidage (40) incluant un dévidoir (44) et un essieu (42) pour le support en rotation du dévidoir (44) sur les première et seconde parois (24) pour le dévidage de la sangle (30);
une unité d'entraînement supportée sur la première paroi (24); et
un train d'engrenages (60) pour la connexion de l'unité d'entraînement à l'unité de dévidage (40),
**caractérisé en ce que** l'unité d'entraînement inclut un ressort hélicoïdal (50) raccordé à la première paroi (24) sur une extrémité et raccordé à l'essieu (42) sur l'autre extrémité.

2. Dispositif d'arrimage selon la revendication 1, dans lequel l'unité d'entraînement inclut en outre un couvercle (52) attaché à la première paroi (24) pour couvrir le ressort hélicoïdal (50).

3. Dispositif d'arrimage selon la revendication 1, dans lequel l'unité d'entraînement inclut un moteur (51) supporté sur la première paroi (24) et raccordé en fonctionnement à l'unité d'augmentation de vitesse (60).

4. Dispositif d'arrimage selon la revendication 1, dans lequel le train d'engrenages (60) est un train d'engrenages augmentant la vitesse (60).

5. Dispositif d'arrimage selon la revendication 4, dans lequel le train d'engrenages (60) inclut:
un petit engrenage (72) raccordé à l'essieu (42) de sorte qu'ils puissent tourner ensemble; et
un grand engrenage (70) mis en prise avec le petit engrenage (72) et raccordé à l'unité d'entraînement.

6. Dispositif d'arrimage selon la revendication 5, dans lequel le train d'engrenages (60) inclut un essieu (80) supporté en rotation sur la première paroi (24) et raccordé au grand engrenage (70) de sorte qu'ils puissent tourner ensemble.

7. Dispositif d'arrimage selon la revendication 6, dans lequel le train d'engrenages (60) inclut en outre un clip (84) inséré sur l'essieu (80) et placé contre un côté opposé de la première paroi (24).

8. Dispositif d'arrimage selon la revendication 5, dans lequel le train d'engrenages (60) inclut une coque (62) attachée à la première paroi (24) pour protéger les petit et grand engrenages (72, 70).

9. Dispositif d'arrimage selon la revendication 5, dans lequel le train d'engrenages (60) inclut en outre un engrenage médian (76) prévu entre les petit et grand engrenages (72, 70).

10. Dispositif d'arrimage selon la revendication 4, dans lequel le train d'engrenages (60) inclut:
un engrenage interne (90) supporté de manière non rotative sur la première paroi (24);
un support (96) placé de manière rotative dans l'engrenage interne (90) et raccordé à l'unité d'entraînement;
des engrenages planétaires (92) supportés de manière rotative sur le support (96) et engrenés avec l'engrenage interne (90); et
un engrenage solaire (94) raccordé à l'essieu (42) de sorte qu'ils puissent tourner ensemble et soient engrenés avec les engrenages planétaires (92).

11. Dispositif d'arrimage selon la revendication 10, dans lequel le train d'engrenages (60) inclut en outre un essieu (80) raccordé au support (96) de sorte qu'ils puissent tourner ensemble et soient raccordés à l'unité d'entraînement.

12. Dispositif d'arrimage selon la revendication 3, dans lequel le train d'engrenages (60) est un train d'engrenages augmentant la vitesse (60).

13. Dispositif d'arrimage selon la revendication 12, dans lequel le train d'engrenages (60) inclut:
un petit engrenage (72) raccordé à l'essieu (42) de sorte qu'ils puissent tourner ensemble; et
un grand engrenage (70) raccordé en fonctionnement au moteur (51).

14. Dispositif d'arrimage selon la revendication 12, dans lequel le moteur (51) inclut un mandrin (53) raccordé au grand engrenage (70).
